(19) Europäisches Patentamt
European Patent Office
Office européen des brevets

(11) **EP 1 186 873 A1**

(12) **EUROPEAN PATENT APPLICATION**

(43) Date of publication:
**13.03.2002 Bulletin 2002/11**

(51) Int Cl.⁷: **G01L 3/14**, B67B 3/20,
H02K 49/10

(21) Application number: **01121480.6**

(22) Date of filing: **07.09.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **08.09.2000 IT MI001973**<br><br>(71) Applicant: **Cipriani, Marco**<br>**10135 Torino (IT)** | (72) Inventor: **Cipriani, Marco**<br>**10135 Torino (IT)**<br><br>(74) Representative: **Cerbaro, Elena, Dr. et al**<br>**STUDIO TORTA S.r.l.,**<br>**Via Viotti, 9**<br>**10121 Torino (IT)** |

(54) **Transmitting and measuring torque with an unequal number of rings of permanent magnets**

(57)   A magnetic coupling device for transmitting and measuring torque, and having a first and a second body (2, 3, 26, 27) rotating relatively with respect to an axis (A), inserted partly one inside the other, and movable relatively both axially and angularly; and a number of first and second permanent magnets (10, 11, 38, 40). The first permanent magnets (10, 38) form a group of first N rings (14, 37) carried integrally by the first body (2, 27) and lying in planes substantially perpendicular to the axis (A); N being a whole number of no less than 1.

The second permanent magnets (11, 40) forming a group of second N+1 rings (15, 39) carried integrally by the second body (3, 26) and concentrically with respect to the group of first N rings (14, 37). Each of the first N rings (14, 37) and second N+1 rings (15, 39) has an even number of magnets (10, 11, 38, 40) arranged so that circumferentially adjacent magnets have alternate polarities. And the magnets are aligned in columns parallel to the axis (A), so that, in each column, axially adjacent magnets have alternate polarities.

Fig. 1

EP 1 186 873 A1

**Description**

The present invention relates to a magnetic coupling device for transmitting and measuring torque.

As is known, various types of magnetic devices are commonly used for connecting a first rotating member (driving body), rotated by a motor, to a second rotating member (driven body) connected to a user device. Such devices, which are used in numerous fields of industry, normally provide for regulating the maximum transmittable torque value, to prevent subjecting the user device to shock which may damage user device and/ or other mechanical components.

For example, in the bottling industry, capping heads are used for automatically fitting screw caps to bottles with threaded necks. The caps must be tightened to a predetermined torque to prevent overtightening, which, besides possibly damaging the caps and bottles, would call for undue effort on the part of the user to uncap the bottle.

In known devices, coupling is achieved in various ways. In a first solution, two appropriately shaped plates of ferromagnetic material are positioned facing each other and connected integrally to the driving and driven bodies respectively; and the plates are connected to electric excitation windings to form a magnetic circuit, which is such that, when the windings are supplied with excitation current, a magnetic force of attraction is generated between the plates to oppose relative rotation of the plates by externally applied torques. That is, when an external torque is applied to the driving body, the plate connected to the tool is driven and rotated by magnetic force; and the maximum transmittable torque is adjustable by the excitation current. The solution described, however, has the disadvantage of requiring connection to an electric power line, and of consuming electric power.

A second solution employs permanent magnets arranged in a first and second ring coaxial with each other and fitted integrally to the driving and driven bodies respectively. The driving and driven bodies are connected by a coupling, e.g. a screw-nut screw coupling, for adjusting the relative axial position of the bodies, and for enabling the driving body to slide axially and continuously, with respect to the driven body, between a maximum-overlap position and a minimum-overlap position. In the maximum-overlap position, the first and second ring are fully facing so that the maximum torque is transmittable; and, as the relative axial position moves towards the minimum-overlap position, increasingly smaller portions of the first and second ring are positioned facing, so that the transmittable torque is reduced. Alternatively, one of the rings of permanent magnets may be replaced with a ring made of highly magnetically permeable material.

The second solution, however, also involves drawbacks. That is, some situations call for drastically reducing transmittable torque or even temporarily disconnecting the driving and driven bodies (as, for example, with a transmission clutch device), which means sliding the driving body and the driven body with respect to one another so as to detach the two rings of magnets completely and achieve zero overlap. This is particularly disadvantageous when compact devices are required. Moreover, to achieve the axial travel necessary to detach the rings of magnets, construction design features, e.g. involving the driving and driven bodies, must be adopted, which make the device complex and expensive to produce.

It is an object of the present invention to provide a magnetic coupling device designed to eliminate the aforementioned drawbacks, and which, in particular, is compact, cheap and easy to produce, and versatile.

According to the present invention, there is provided a magnetic coupling device for transmitting and measuring torque, and comprising:

> a first and a second body rotating relatively with respect to an axis, inserted partly one inside the other parallel to said axis, and movable relatively both axially and angularly; and
> a number of first permanent magnets;

> characterized in that said first permanent magnets form a group of first N rings carried integrally by said first body and lying in planes substantially perpendicular to said axis; and by comprising second permanent magnets forming a group of second N+1 rings carried integrally by said second body and concentrically with respect to said group of first N rings; N being a whole number of no less than 1.

Each of said first N rings and said second N+1 rings comprises an even number of magnets arranged so that circumferentially adjacent magnets have alternate polarities; said second magnets are aligned in columns parallel to said axis, so that, in each column, axially adjacent magnets have alternate polarities; and, when N is strictly greater than 1, said first magnets are aligned in columns parallel to said axis, so that, in each column, axially adjacent magnets have alternate polarities.

For a given maximum transmittable torque value, the device according to the invention is compact even when fully extended. That is, slip torque can be adjusted between a maximum value and a minimum value (normally zero) by simply sliding the first and second bodies with respect to each other so that the first rings are positioned equidistantly between two respective second rings, without having to detach the rings completely. And for the same reason, for a given size, the device is capable of transmitting extremely high torque values, much higher than known devices.

Moreover, since torque adjustment calls for a limited amount of axial travel, the device is more straightforward in design and easier to produce.

The device according to the present invention is also extremely versatile and can be used in numerous applications, such as bottle capping heads, tensioned cable reeling systems, tool protection devices (e.g. for lathes, drills, milling machines, dynamometric screwers), vehicle clutches, and torque meters.

A non-limiting embodiment of the invention will be described by way of example with reference to the accompanying drawings, in which:

Figure 1 shows a longitudinally sectioned side view of a first embodiment of a magnetic device for transmitting and measuring torque in accordance with the present invention;
Figure 2 shows a top plan view of the Figure 1 device sectioned along line II-II;
Figure 3 shows a simplified diagram of a detail of the Figure 1 device;
Figures 4-6 show longitudinally sectioned side views of a second embodiment of a magnetic device for transmitting and measuring torque in accordance with the present invention, in a first, second and third operating position respectively;
Figure 7 shows a top plan view of the Figure 4 device sectioned along line VII-VII.

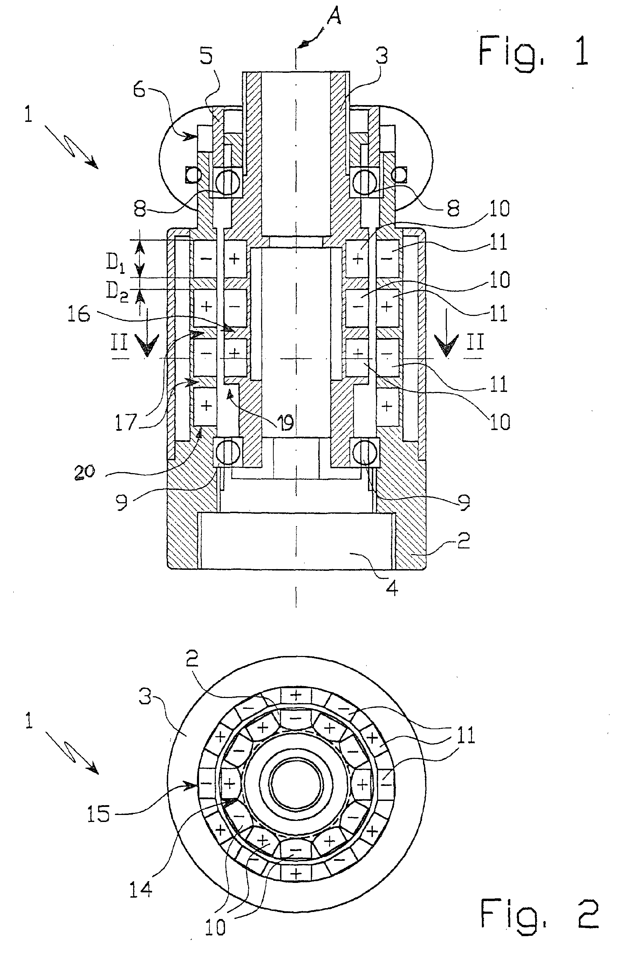

Number 1 in Figures 1 and 2 indicates as a whole a first embodiment of a magnetic coupling device for transmitting and measuring torque and employed in the manufacture of a capping head for applying screw caps.

Device 1 comprises a driving body 2 having a seat 4 at one end for connection to a known drive shaft (not shown); and a driven body 3 with known attaching means (not shown) for receiving a screw cap for assembly to a bottle. Driving body 2 and driven body 3 are preferably cylindrical and hollow.

Driving body 2 is inserted partly inside driven body 3 along a longitudinal axis A, and is movable axially and angularly with respect to driven body 3. A ring nut 5, in which driving body 2 is inserted idly, cooperates with a threaded portion 6 of driven body 3 to form a screw-nut screw coupling, which may be activated to selectively adjust the relative axial position of driving body 2 and driven body 3; and the connection between ring nut 5 and threaded portion 6 of driven body 3 may be locked to fix said relative axial position when device 1 is in use.

First and second bearings 8, 9 are interposed between driving body 2 and driven body 3 to keep the two bodies aligned and coaxial with axis A, and to assist relative rotation.

Device 1 also comprises a number of first and second magnets 10, 11 arranged to form respectively a group of first N rings 14 and a group of second N+1 rings 15; N being a whole number of at least 1 (in the embodiment described, N equals 3).

First and second rings 14, 15 are carried integrally by driving body 2 and driven body 3 respectively, are arranged concentrically, lie in planes substantially perpendicular to axis A, and have the same axial dimension $D_1$. First rings 14 have an outer radius substantially equal to the inner radius of second rings 15, so that, in use, first magnets 10 are positioned facing second magnets 11.

Rings 14, 15 all comprise the same even number of magnets (e.g. 12) arranged so that circumferentially adjacent magnets in each ring have alternate polarities (Figure 2).

Second magnets 11 in separate second rings 15 are aligned in columns parallel to axis A, so that axially adjacent magnets in each column have alternate polarities (Figure 1). And when N is strictly greater than 1, first magnets 10 in separate first rings 14 are also aligned in columns parallel to axis A, so that axially adjacent magnets in each column have alternate polarities.

First rings 14 are equally spaced axially and separated by first separating regions 16; the second N+1 rings are equally spaced axially and separated by second separating regions 17; and the first and second separating regions have the same axial dimension $D_2$.

In other words, first rings 14 and second rings 15 respectively occupy an inner cylindrical region 19 and an outer cylindrical region 20, both coaxial with respect to axis A; and inner cylindrical region 19 is located both axially and radially within outer cylindrical region 20, and may be set selectively to a number of distinct axial positions with respect to, but inside, outer cylindrical region 20.

In actual use, by means of ring nut 5, driving body 2 and driven body 3 can be moved axially with respect to each other to adjust the relative axial position of first and second rings 14, 15 continuously between a maximum-overlap position and a minimum-overlap position.

More specifically, in the maximum-overlap position, pairs of first and second rings 14, 15 are positioned fully facing, so that magnetic interaction between the facing first and second rings 14, 15, and therefore the limit (slip) torque value transmittable from driving body 2 to driven body 3, is maximum.

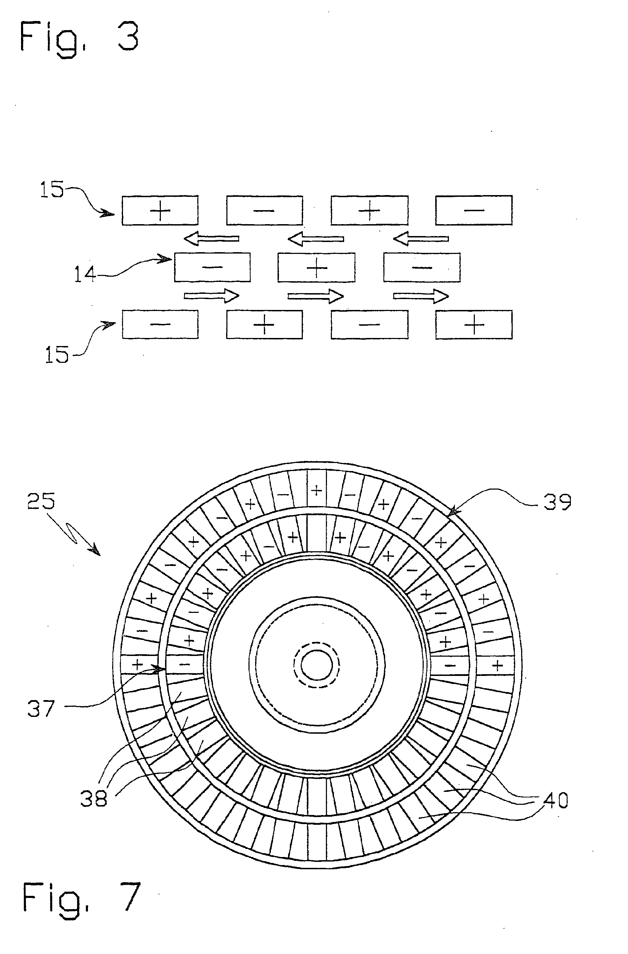

As shown schematically in Figure 3, in the minimum-overlap position, each first ring 14 is set to an intermediate axial position between and equidistant from two respective second rings 15. Since the polarities of first and second magnets 10, 11 alternate both circumferentially (in the same ring) and axially (in the same column), a zero resultant torque is applied between first and second rings 14, 15, and driving body 2 and driven body 3 are disconnected angularly. In fact, by interacting with second magnets 11 in the adjacent second rings 15, each first magnet 10 is subjected to two forces of equal value (each first ring 14 is equidistant from two second rings 15) but opposite in direction (due to the alternate polarities of the magnets), as shown schematically in Figure 3 by the left- and right-pointing arrows.

To switch from the maximum-overlap position, in which the slip torque value is maximum, to the minimum-overlap position, in which driving body 2 and driven body 3 are disconnected angularly, first and second rings 14, 15 must be moved axially with respect to each other by a distance P according to the equation:

$$P = (D_1 + D_2)/2$$

By means of ring nut 5, a slip torque value is therefore first selected; driving body 2 is then rotated by the motor (not shown) and drives driven body 3 to which a resisting torque (e.g. to tighten a screw cap) is applied; and, when the resisting torque equals the set slip torque, driven body 3 begins slipping with respect to driving body 2 to prevent any higher torques from being transmitted.

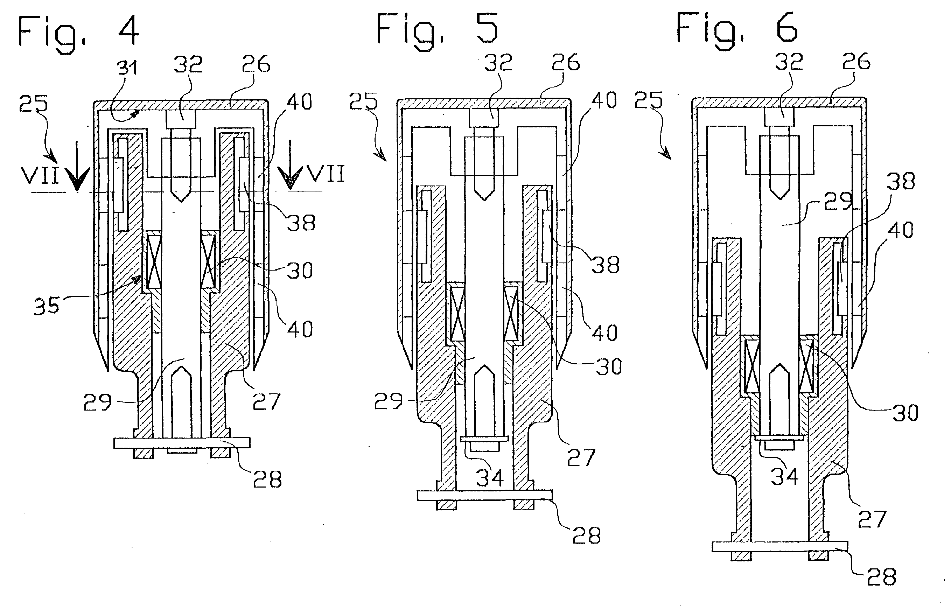

A further embodiment of the invention will now be described with reference to Figures 4-7, in which any parts similar to those already described are indicated using the same reference numbers, and in which a magnetic coupling device 25 for transmitting and measuring torque is used to form a torque meter comprising a hollow, substantially cylindrical casing 26, and a rotating body 27 inserted partly inside and coaxial with casing 26, and having a connecting element 28 to which is applied an external torque for measurement.

Casing 26 and rotating body 27 are connected by a screw-nut screw coupling defined by a threaded rod 29 and a ball screw 30.

More specifically, threaded rod 29 is connected to and axially and angularly integral with a bottom wall 31 of casing 26 by means of a lock screw 32, and is fitted on one end with a stop washer 34 projecting radially to form an annular projection.

Ball screw 30 is carried by and axially and angularly integral with rotating body 27, is housed in a seat 35, and cooperates with threaded rod 29 so that relative rotations of casing 26 and rotating body 27 correspond to respective relative axial displacements.

Like device 1 in Figure 1, device 25 comprises a group of first N rings 37 defined by first permanent magnets 38; and a group of second N+1 rings 39 defined by second permanent magnets 40; N being a whole number of at least 1 (in the Figure 4-7 embodiment, N equals 1).

First and second rings 37, 39 are carried integrally by rotating body 27 and casing 26 respectively, are arranged concentrically, lie in planes substantially perpendicular to the longitudinal axis A of casing 26, and have the same axial dimension $D_1$.

Rings 37, 39 all comprise the same even number of magnets (e.g. 32) arranged so that circumferentially adjacent magnets in each ring have alternate polarities (Figure 7); and second magnets 40 in separate second rings 39 are aligned in columns parallel to axis A, so that axially adjacent magnets in each column have alternate polarities (Figures 4-6).

First and second magnets 38, 40 have respective substantially rectangular surfaces facing each other.

Device 25 also has a known indicator (not shown) cooperating with a graduated scale to indicate relative axial displacements of casing 26 and rotating body 27.

Figures 4 to 6 show device 25 in a first stop position, a rest position, and a second stop position respectively. In the rest position, first ring 37 is axially equidistant from second rings 39, so that, as explained with reference to Figure 3, casing 26 and rotating body 27 are balanced, due to the alternating arrangement of first and second magnets 38, 40. When a torque to be measured is applied to connecting element 28 of rotating body 27, relative rotation of rotating body 27 and casing 26 is produced, and, owing to the screw-nut screw connection of threaded rod 29 and ball screw 30, results in relative axial displacement of rotating body 27 and casing 26 - in particular, towards the first stop position (Figure 4) if the torque to be measured is clockwise, and towards the second stop position (Figure 6) if the torque to be measured is anticlockwise.

Consequently, a resisting torque is generated between first ring 37 and second rings 39, and balances the applied torque to be measured. The relative displacement of threaded rod 29 and ball screw 30, which is shown by the indicator and graduated scale, therefore indicates the value of the torque to be measured. Moreover, since first and second magnets 38, 40 are rectangular, the relationship between the torque applied to connecting element 28 and the relative axial displacement is linear.

Clearly, changes may be made to the magnetic coupling device as described herein without, however, departing from the scope of the present invention.

**Claims**

1. A magnetic coupling device for transmitting and measuring torque, and comprising:

   a first and a second body (2, 3, 26, 27) rotating relatively with respect to an axis (A), inserted partly one inside the other parallel to said axis (A), and movable relatively both axially and angularly; and
   a number of first permanent magnets (10, 38);

   **characterized in that** said first permanent magnets (10, 38) form a group of first N rings (14, 37) carried integrally by said first body (2, 27) and lying in planes substantially perpendicular to said axis (A); and by comprising second permanent magnets (11, 40) forming a group of second N+1 rings (15, 39) carried integrally by said second body (3, 26) and concentrically with respect to said group of first N rings (14, 37); N being a whole number of no less than 1.

2. A device as claimed in Claim 1, **characterized in that** each of said first N rings (14, 37) and said second N+1 rings (15, 39) comprises an even number of magnets (10, 11, 38, 40) arranged so that circumferentially adjacent magnets have alternate polarities.

3. A device as claimed in Claim 2, **characterized in that** said second permanent magnets (11, 40) are aligned in columns parallel to said axis (A), so that, in each column, axially adjacent magnets have alternate polarities.

4. A device as claimed in Claim 3, **characterized in that**, when N is strictly greater than 1, said first permanent magnets (10, 37) are aligned in columns parallel to said axis (A), so that, in each column, axially adjacent magnets have alternate polarities.

5. A device as claimed in Claim 4, **characterized in that** said first N rings (14, 37) and said second N+1 rings (15, 39) respectively occupy a first and a second cylindrical region (19, 20), both coaxial with respect to said axis (A); said first cylindrical region (19) being located axially within said second cylindrical region (20).

6. A device as claimed in Claim 5, **characterized in that** said first cylindrical region (19) is located radially within said second cylindrical region (20).

7. A device as claimed in any one of the foregoing Claims, **characterized in that** said first N rings (14, 37) are equally spaced axially and separated by first separating regions (16); and **in that** said second N+1 rings (15, 39) are equally spaced axially and separated by second separating regions (17); said first and second separating regions (16, 17) having the same axial dimension ($D_2$).

8. A device as claimed in any one of the foregoing Claims, **characterized in that** said first and said second body (2, 3, 26, 27) are connected to each other by screw-nut screw connecting means (5, 6, 29, 30).

9. A device as claimed in Claim 8, **characterized in that** said first and said second body (27, 26) are connected to each other by screw-nut screw connecting means (29, 30), so that relative rotations of said first and said second body (27, 26) correspond to respective relative axial displacements.

10. A device as claimed in Claim 9, **characterized in**

**that** said screw-nut screw connecting means comprise a threaded rod (29) and a ball screw (30) axially and angularly integral with said first and said second body (27, 26) respectively.

11. A device as claimed in Claim 10, **characterized in that** said screw-nut screw connecting means (5, 6) are selectively activatable to vary a relative axial position of said first and said second body (2, 3); said screw-nut screw connecting means (5, 6) also being lockable to fix said relative axial position of said first and said second body (2, 3).

12. A device as claimed in Claim 11, **characterized in that** said screw-nut screw connecting means comprise a threaded portion (6) of said second body (3), and a ring nut (5) fitted to said threaded portion (6); said first body (2) being inserted idly inside said ring nut (5) so as to be angularly movable with respect to said second body (3).

Fig. 1

Fig. 2

# Fig. 3

# Fig. 7

Fig. 4

Fig. 5

Fig. 6

EP 1 186 873 A1

**European Patent Office**

## EUROPEAN SEARCH REPORT

Application Number

EP 01 12 1480

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 295 18 687 U (BURGMANN) 11 January 1996 (1996-01-11) * claims 1,2; figure 1 * | 1 | G01L3/14 B67B3/20 H02K49/10 |
| X | EP 0 034 992 B (ANVAR) 11 May 1983 (1983-05-11) * column 3, line 3 - line 15; figure 1 * | 1 | |
| A | US 6 041 571 A (FOWLER) 28 March 2000 (2000-03-28) * column 4, line 4 - line 19; figure 4 * | | |
| A | US 5 313 765 A (ANDERSON-MARTIN) 24 May 1994 (1994-05-24) * column 5, line 50 - line 64; figures 7,8 * | | |
| A | US 4 761 989 A (MR. THOMAS) 9 August 1988 (1988-08-09) * column 4, line 45 - line 50; figures 1-3 * | | **TECHNICAL FIELDS SEARCHED (Int.Cl.7)** |
| A | US 5 158 279 A (XEROX) 27 October 1992 (1992-10-27) * figure 1 * | | G01L B67B H02K |

The present search report has been drawn up for all claims

| Place of search | Date of completion of the search | Examiner |
|---|---|---|
| MUNICH | 3 December 2001 | Mielke, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 186 873 A1**

**ANNEX TO THE EUROPEAN SEARCH REPORT
ON EUROPEAN PATENT APPLICATION NO.**    EP 01 12 1480

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2001

| Patent document cited in search report | | Publication date | Patent family member(s) | | Publication date |
|---|---|---|---|---|---|
| DE 29518687 | U | 11-01-1996 | DE | 29518687 U1 | 11-01-1996 |
| EP 34992 | B | 02-09-1981 | FR | 2476779 A1 | 28-08-1981 |
| | | | AT | 3350 T | 15-05-1983 |
| | | | DE | 3160250 D1 | 16-06-1983 |
| | | | EP | 0034992 A1 | 02-09-1981 |
| US 6041571 | A | 28-03-2000 | NONE | | |
| US 5313765 | A | 24-05-1994 | US | 5437139 A | 01-08-1995 |
| US 4761989 | A | 09-08-1988 | NONE | | |
| US 5158279 | A | 27-10-1992 | JP | 5248453 A | 24-09-1993 |

EPO FORM P0459

For more details about this annex : see Official Journal of the European Patent Office, No. 12/82

10